# EUROPÄISCHE PATENTANMELDUNG

(11) **EP 1 529 610 A1**
(43) Veröffentlichungstag der Anmeldung: **11.05.2005**
(21) Anmeldenummer: 04450204.5
(22) Anmeldetag: 04.11.2004
(51) Int. Cl.: B26F 1/38, B26D 3/16

(54) **Verfahren und Vorrichtung zum Fertigen einer mehrdimensionalen Randlinie an einem Werkstück**

(30) Priorität: 06.11.2003 AT 17742003
(71) Anmelder: SSC Prototypen-Anlagenbau GmbH, 8605 Kapfenberg (AT)
(72) Erfinder: Petz, Helmut, 8605 Kapfenberg (AT); Ebner, Walter, 8600 Bruck/Mur (AT)
(74) Vertreter: Kopecky, Helmut, Dipl.-Ing.

(57) **Zusammenfassung**

Ein Verfahren zum Schneiden einer zwei- oder dreidimensionalen Randlinie (2, 6) an einem dreidimensionalen, dünnwandigen Werkstück (1), insbesondere an einem aus einer Kunststofffolie oder aus mehreren übereinandergelegten, miteinander verbundenen Kunststofffolien geformten Werkstück (1), wobei die Randlinie (2, 6) von mindestens zwei entlang der Randlinie (2, 6) angeordneten Messern (7, 26, 27) mit jeweils einer Schneide (10, 28) geschnitten wird und die Messer (7, 26, 27) nur von einer Oberflächenseite des Werkstückes (1) an die Randlinie (2, 6) heranbewegt werden, wobei das Werkstück (1) während des Schneidvorganges beidseitig mit dieses fixierenden Spannkräften beaufschlagt wird, und zwar durch Einspannen zwischen einem innenseitig zur Anlage gelangenden Stempel (S) und einer außenseitig zur Anlage gelangenden Matrize (M), wobei zur Erzielung kurzer Taktzeiten und sauberer Ränder, die keine Nachbearbeitung erfordern, derart ausgestattet ist, dass alle Messer (7, 26, 27) mit der Schneide nach dem Durchschneiden des Werkstückes (1) geringfügig in den Stempel (S) eindringen (Fig. 6).

## Beschreibung

Die Erfindung betrifft ein Verfahren zum Schneiden einer zwei- oder dreidimensionalen Randlinie an einem dreidimensionalen, dünnwandigen Werkstück, insbesondere an einem aus einer Kunststofffolie oder aus mehreren übereinandergelegten, miteinander verbundenen Kunststofffolien geformten Werkstück, wobei die Randlinie von mindestens zwei entlang der Randlinie angeordneten Messern mit jeweils einer Schneide geschnitten wird und die Messer nur von einer Oberflächenseite des Werkstückes an die Randlinie heranbewegt werden, wobei das Werkstück während des Schneidvorganges beidseitig mit dieses fixierenden Spannkräften beaufschlagt wird, und zwar durch Einspannen zwischen einem innenseitig zur Anlage gelangenden Stempel und einer außenseitig zur Anlage gelangenden Matrize, sowie eine Vorrichtung zur Durchführung des Verfahrens.

Dreidimensionale Werkstücke aus Kunststofffolien, insbesondere aus mehrlagigen Kunststofffolien, wie z.B. aus einer Kunststoffträgerschicht, einer Verbindungsschicht und einer Auflage aus gefärbtem kratzfestem Plexiglas bestehend, werden in der Regel tiefgezogen. Nach dem Tiefziehen besteht das Problem, das eigentliche Werkstück aus der tiefgezogenen Folie, die naturgemäß in ihren Abmessungen die des eigentlichen Werkstückes überschreiten muss, herauszutrennen.

Man hat versucht dies durch Stanzen zu bewerkstelligen, was jedoch infolge einer dreidimensionalen Werkstückform, wenn überhaupt, dann nur sehr schwierig zu bewerkstelligen ist, und wobei es aber trotz aller Vorsichtsmaßnahmen sehr häufig zu einem Bruch des Materials kommt, sodass oftmals nicht nur die Ränder des Werkstückes Mängel aufweisen, sondern das Werkstück als Ganzes beschädigt ist.

Zur Vermeidung solcher Brüche war man gezwungen, das Werkstück mit einem Übermaß aus der tiefgezogenen Platte herauszutrennen, um dann die Randlinie des Werkstückes durch Fräsen herzustellen. Dieses Verfahren ist sehr teuer und umständlich und ermöglicht nur die Fertigung einer geringen Stückzahl je Zeiteinheit. Zudem kann es zu Vibrationen beim Eingriff des Fräsers kommen, was einen rauhen und auch welligen Rand des Werkstückes ergibt. Zudem bildet sich beim Fräsvorgang neben Spänen und Staub ein Grat, der wiederum ein Nachbehandeln erfordert.

Aus der US 4 991 478 A ist ein Verfahren der eingangs beschriebenen Art zum Schneiden eines dünnwandigen Werkstückes bekannt, bei dem eine Vielzahl von schmalen, nebeneinanderliegenden Messern entlang der Schnittlinie des Werkstückes angeordnet sind, wobei die Messer eines nach dem anderen, mittels einer um die Schneidlinie umlaufenden Rolle in das Werkstück bewegt werden. Hierbei lässt sich jedoch keine exakte Bewegung der Messer erzielen, zumal bevorzugt die die Messer bewegende Rolle aus elastischem Material gebildet ist. Die Messer werden sozusagen nur mit einem bestimmten Schneiddruck gegen das Material bewegt, wobei die Messer entweder nur zum Teil in das Material des Werkstückes eindringen, also keinen Trennschnitt durchführen, oder im Falle eines Trennschnitts in eine im Stempel vorgesehene Freistellung für die Messer eindringen.

Die Erfindung bezweckt die Vermeidung dieser Nachteile und Schwierigkeiten und stellt sich die Aufgabe, ein Verfahren der eingangs beschriebenen Art und eine Vorrichtung zur Durchführung des Verfahrens zu schaffen, welche eine sehr genaue Fertigung eines dreidimensionalen Werkstückes mit zwei- oder dreidimensionalen Randlinien ermöglicht. Insbesondere soll der Vorgang in sehr kurzer Zeit bewerkstelligbar sein, sodass das Verfahren und die Vorrichtung für eine Massenfertigung mit kurzer Taktzeit eingesetzt werden können. Weiters soll die Herstellung des Randes bzw. der Ränder des Werkstückes in einem einzigen Arbeitsschritt, ohne Vor- und Nacharbeiten zu erfordern, bewerkstelligt werden können.

Bei einem Verfahren der eingangs beschriebenen Art wird die Aufgabe dadurch gelöst, dass alle Messer mit der Schneide nach dem Durchschneiden des Werkstückes geringfügig in den Stempel eindringen.

Eine spezielle Aufgabe der Erfindung liegt darin, auch einen gekrümmten, gegebenenfalls dreidimensional gekrümmten, Rand des Werkstückes zu schneiden, und zwar von der Seite des Krümmungsmittelpunktes aus.

Diese Aufgabe wird erfindungsgemäß dadurch gelöst, dass die Schneiden benachbarter Messer einander zumindest während des Schneidvorganges über einen Bereich überlappen, wobei die Messer mit Abschnitten ihrer Schneidenrücken aneinander anliegen.

Das erfindungsgemäße Verfahren ermöglicht ein Schneiden in einem einzigen Arbeitsschritt auch äußerst komplexer Geometrien; es gestattet insbesondere äußere als auch innere Formpartien auszuschneiden bzw. zu beschneiden, wobei auch Hinterschnitte durchgeführt werden können. Die Messerschneiden selbst können eine dreidimensionale und entsprechend einem gewünschten Rand des Werkstückes gestaltete Schneide aufweisen. Dadurch, dass benachbarte Messer mit Abschnitten ihrer Schneidenrücken aneinander anliegen, und zwar mit seitlichen Endbereichen der Schneiden, ergibt sich eine geschlossene Schnittlinie, und zwar auch dann, wenn die Messer an eine konvex geformte Wölbung des Werkstückes von der Seite des Krümmungszentrums hinbewegt werden.

Hierbei wird vorzugsweise die Schnittlinie abwechselnd von Messern zum Schneiden einer Außen- und Messern zum Schneiden einer Innenform gebildet.

Zweckmäßig werden die Messer nur von der Sichtseite des Werkstückes zum Werkstück geführt.

Eine Vorrichtung zur Durchführung des erfindungsgemäßen Verfahrens mit:
- einem Stempel als Auflage für das Werkstück, auf dem das Werkstück mindestens im Bereich der Randlinie zur Anlage gelangt,
- einer Matrize zum Einspannen des Werkstückes gegen den Stempel, wobei die Matrize im Abstand von der Randlinie am Werkstück anliegt und,
- mit gegen die Randlinien von nur eine Oberflächenseite des Werkstückes bewegbaren Messer, ist dadurch gekennzeichnet, dass alle Messer geringfügig über die Dicke des Werkstückes hinaus bewegbar sind.

Eine vorteilhafte Ausführungsform ist durch die Kombination folgender Merkmale gekennzeichnet:
- einen Messerhalter mit Gleitführungen für mindestens zwei benachbart in dem Messerhalter angeordnete Messer und
- mindestens zwei Messer, deren Schneiden einander bei in Schneidposition gebrachten Messern teilweise überlappen,
- wobei ein Messer mit seinem Schneidenrücken nach einer ersten Richtung gewendet im Messerhalter angeordnet ist und das benachbarte Messer mit seinem Schneidenrücken in einer zur ersten Richtung entgegengesetzten Richtung am Messerhalter angeordnet ist, wobei die Schneidenrücken mit Endabschnitten bei in Schneidposition gebrachten Messern aneinander anliegen und während des Schneidens aneinander gleitend geführt sind.

Eine weitere bevorzugte Ausführungsform ist dadurch gekennzeichnet, dass die Führungen am Messerhalter sternfömig sich radial nach außen erstrecken und die Messer synchron mittels eines im Messerhalter zentral angeordneten Keildorns radial nach außen bewegbar sind und dass die Messer vorzugsweise mittels Federn nach Rückziehen des Keildorns in die Ausgangsposition mittels elastisch federnder Mittel bewegbar sind, wobei zweckmäßig die Messer ebene geradlinige Führungsflächen aufweisen, die an ebenen geradlinigen Gegenführungsflächen des Messerhalters gleitend angeordnet sind, wogegen die Schneiden der Messer zwei- oder dreidimensional geformt sind und benachbarte Messer gegengleich angeordnet sind, d.h. dass bei einem Messer der Schneidenrücken nach einer ersten Seite hin und beim benachbarten Messer nach einer zur ersten Seite entgegengesetzten Seite hin gerichtet ist.

Hierbei sind die Keilwinkel der Schneiden benachbarter Messer von einer gedachten Schnittfläche einander entgegengesetzt orientiert.

Um eine genaue Ausrichtung der Schneiden an die gewünschte Schnittlinie zu ermöglichen, sind zweckmäßig die Messer an einem Messerblock vorgesehen, der in sämtlichen Richtungen des Raumes gegenüber einem Maschinengestell verstellbar ist.

Für mehrlagige Kunststoffe, wie eingangs beschrieben, insbesondere einen dreilagigen Kunststoff, der an einer Seite mit einer spröden Plexiglasfolie überzogen ist, hat sich ein Keilwinkel der Messer zwischen 10 und 30°, vorzugsweise zwischen 17 und 23°, bestens bewährt.

Eine besonders saubere Randlinie lässt sich erzielen, wenn der Messerweg derart bemessen ist, dass die Schneide der Messer sich über die Innenfläche des Werkstückes geringfügig hinausbewegt, vorzugsweise um maximal 0,5 mm, insbesondere um maximal 0,3 mm.

Eine spezielle Aufgabe der Erfindung liegt darin, für das Schneiden eines aus einer Kunststofffolie oder aus mehreren miteinander verbundenen Kunststofffolien gebildeten Werkstückes ein Material für die Schneiden der Messer ausfindig zu machen, das eine große Standzeit der Messer ermöglicht.

Diese Aufgabe wir dadurch gelöst, dass die Schneide des Messers aus Warmarbeitsstahl, insbesondere aus 1.2343 oder 1.2344 oder 1.6565 nach DIN, letzterer auch wie folgt abgewandelt:

| | | | | | | | | |
|---|---|---|---|---|---|---|---|---|
| C | Si | Mn | P | S | Cr | Ni | Mo | V |
| ,42 | ,30 | ,85 | ,008 | ,011 | 1,04 | 1,23 | ,67 | ,098 |

gebildet ist und vorzugsweise poliert ist.

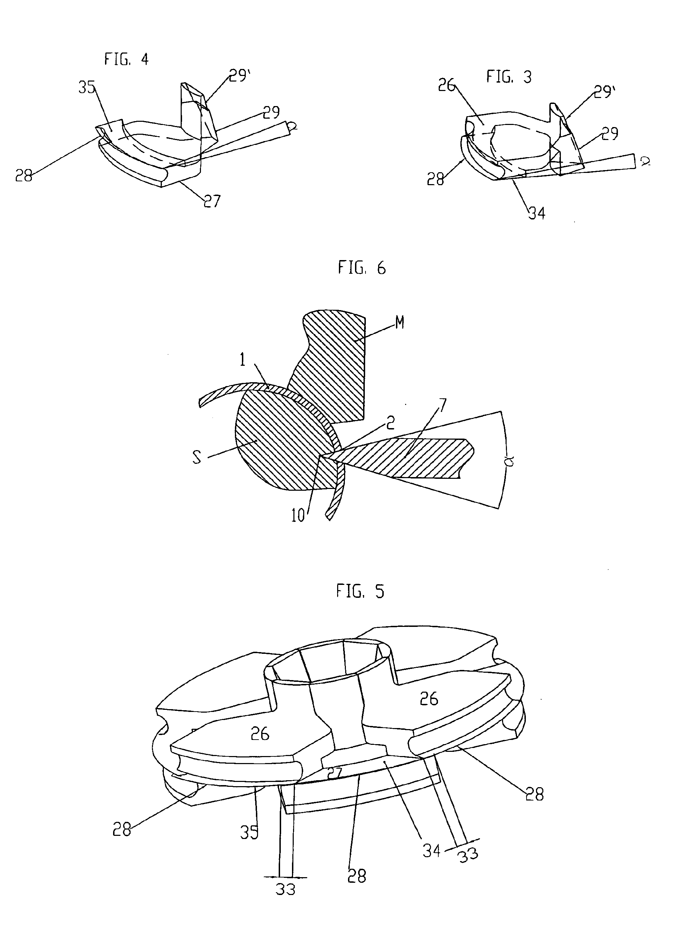

Die Erfindung ist nachfolgend anhand eines Ausfiihrungsbeispiels, das in der Zeichnung dargestellt ist, näher veranschaulicht. Fig. 1 zeigt die erfindungsgemäße Vorrichtung in Seitenansicht zu Beginn eines Schnittvorganges, Fig. 2 veranschaulicht einen Messerblock im Längsschnitt und die Fig. 3 und 4 zeigen zwei einander benachbarte Messer, jeweils einzeln in Schrägrissdarstellung. Fig. 5 zeigt in Schrägrissdarstellung die Messer im im Messerblock eingebauten Zustand, jedoch unter Weglassung von diese Messer verdeckenden Teilen, Fig. 6 ein Detail im Schnitt.

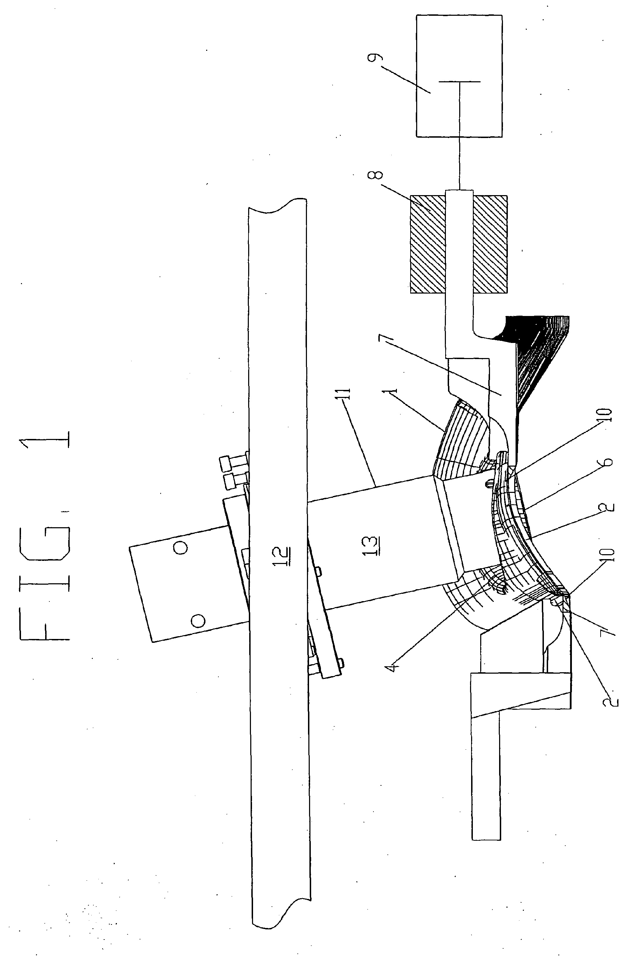

Fig. 1 zeigt die Ansicht einer erfindungsgemäßen Vorrichtung mit einem in Schneidstellung gebrachten dreidimensionalen Werkstück 1, dessen Randlinien 2 nach dem Tiefziehen zu beschneiden sind, sodass das Werkstück 1 nach dem Schneiden die gewünschten Randlinien 2 in sauberer und glatter Form aufweist. Das dreidimensionale Werkstück 1 stellt beispielsweise eine Verkleidung eines Amaturenbretts eines Kraftfahrzeuges dar; es ist konvex gewölbt und weist inmitten seiner gewölbten Fläche 3 eine kraterförmige Vertiefung 4 auf, die in eine Öffnung übergeht, deren Randlinie 6 jedoch von einer Kreislinie abweicht, es handelt sich bei dem zu schneidenden Rand der Vertiefung 4 um eine dreidimensionale Randlinie 6.

Dieses Werkstück 1 wurde aus einer dreilagigen Folie gefertigt, es weist eine zähe Trägerschicht an der Rückseite auf, die mit einem spröden Plexiglas, das gefärbt und kratzfest ist, mittels einer Verbindungsschicht verbunden ist.

Zum Schneiden der äußeren Randlinien 2 des Werkstückes 1 dienen von außen an das Werkstück 1 heranführbare Messer 7, die gemäß Fig. 1 in etwa horizontaler Richtung gegen das Werkstück 1 heranführbar sind, zu welchem Zweck für jedes Messer 7 eine Führung 8 und ein Antrieb 9, z.B. ein hydraulischer oder ein pneumatischer Druckmittelzylinder, vorgesehen ist. Das Werkstück 1 selbst ist auf einem zwecks Übersichtlichkeit nicht näher dargestellten Stempel aufgesetzt und gegen eine Matrize eingespannt. Der Stempel S weist - wie Fig. 6 veranschaulicht - eine Form entsprechend der Innenseite des Werkstückes 1 auf, und zwar mindestens im Bereich der Randlinien 2 und 6. Die Matrize M hingegen spannt das Werkstück 1 gegen den Stempel S - lässt jedoch die Randlinie 2 bzw. 6 frei. Wie aus Fig. 1 zu erkennen ist, werden alle Messer für die Randlinien 2 und 6 des Werkstückes 1 von einer einzigen Oberflächenseite, nämlich von außen, an das Werkstück 1 herangeführt.

Zur besseren Übersicht sind in Fig. 1 lediglich zwei für das Schneiden der äußeren Randlinie 2 dienende Messer 7 veranschaulicht. Die übrigen für das Schneiden der Randlinie 2 dienenden Messer sind in gleicher Weise gestaltet, wie die dargestellten. Alle Messer 7 weisen Schneiden 10 auf, die genau an die gewünschte Randlinie 2 angepasst sind, d.h. dass die Schneiden 10 aller Messer 7 eine dreidimensional geformte Schneide 10 entsprechend der dreidimensional gestalteten Randlinie 2 des Werkstückes 1 aufweisen.

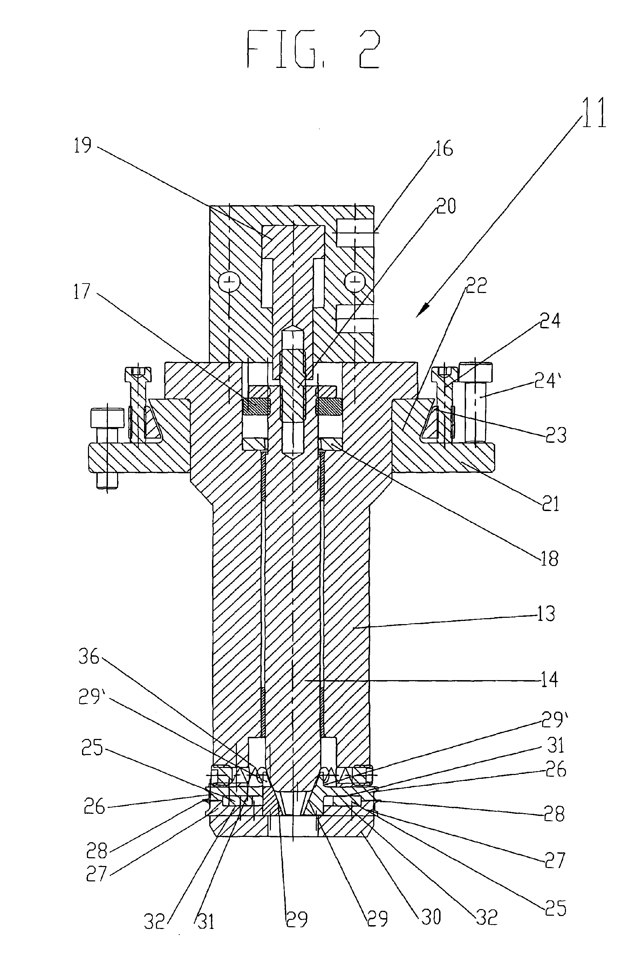

Zum Schneiden der Randlinie 6 der kraterförmigen Ausnehmung 4 dient ein speziell ausgestalteter Messerblock 11, der an einem schematisch dargestellten Maschinengestell 12 der Vorrichtung in der gewünschten geneigten Position, die die Randlinie 6 der kraterförmigen Ausnehmung 4 einnimmt, befestigbar ist. Dieser Messerblock 11 ist in Fig. 2 im Axial-Schnitt dargestellt. Er weist eine im Wesentlichen zylindrischgestaltete Aufnahme 13 auf, in deren Innerem ein zylindrisch gestalteter Dorn 14 mit Keilendflächen 15 mit Hilfe eines Druckmittelzylinders 16 z.B. hydraulisch oder pneumatisch axial bewegbar gelagert ist. Der Dorn 14 weist an seinem dem Druckmittelzylinder 16 zugewandten Ende einen einstellbaren Anschlag 17 auf, mit dem er am Ende des Schneidvorgangs an einem Anschlagstück 18, das in der Aufnahme 13 vorgesehen ist, zur Anlage gelangt. Zwischen dem Dorn 14 und dem Kolben 19 des Druckmittelzylinders 16 ist noch eine die Lage des Doms 14 gegenüber dem Druckmittelzylinder 16 regulierende Einstellschraube 20 vorgesehen.

Die Aufnahme 13 ist am oberen Ende mit einem Fixierring 21 versehen, welcher Fixierring 21 einen im Querschnitt keilförmigen Ringwulst 22 aufweist, mit dem er an einem an einem Maschinengestell 12 befestigbaren Einstellkeil 23 anliegt. Mittels Stellschrauben 24 lässt sich die Relativlage des Einstellkeiles 23 gegenüber dem Fixierring 21 verändern, wodurch es möglich ist, den Messerblock 11 äußerst genau quer zur Längsachse der Aufnahme 13 in die gewünschte Schneid-Position zu bringen und am Maschinengestell 12 zu fixieren. Zur Verstellung in Richtung der Längsachse der Aufnahme 13 dienen Stellschrauben 24, die am Maschinengestell 12 und am Fixierring 21 angreifen.

Am unteren Ende der Aufnahme ist ein Messerhalter 25 vorgesehen, an dem mehrere über den Umfang der Aufnahme 13 herausragende Messer 26, 27 verschiebbar geführt sind. Jedes Messer 26, 27 hat der Schneide 28 gegenüberliegend einen Fortsatz mit Keilflächen 29 mit dem es an einer der Keilendflächen 15 Ende des Doms 14 zur Anlage gelangt. Der Messerhalter 25 und die Messer 26, 27 werden mittels eines Messergegenhalters 30 an der Aufnahme 13 fixiert, welcher Messergegenhalter 30 am Ende der Aufnahme 13 mittels Schraubverbindungen befestigbar ist.

Der Messerhalter 25, an dem die Messer 26, 27 in radialer Richtung verschiebbar geführt sind, weist eine Besonderheit auf; er führt nämlich jeweils an seiner einen als Führungsfläche dienenden Seite 31 ein Messer 26 und an seiner gegenüberliegenden ebenfalls als Führungsflächen dienenden Seite 32 das benachbarte Messer 27. Die Messer 26, 27 selbst weisen Schneiden 28 auf, die entsprechend der dreidimensionalen Form der Randlinie 6 der kraterförmigen Vertiefung 4 gestaltet sind. Benachbarte Messer 26, 27 überlappen einander in den Endbereichen 33 ihrer Schneidenrücken 34 bzw. 35, und zwar einander berührend. Es ist also jeweils ein Messer 26 mit seinem Schneidenrücken 34 gegen den Schneidenrücken 35 des benachbarten Messers 27 gerichtet. Somit sind auch die Keilwinkel α der Schneiden 28 benachbarter Messer 26, 27 jeweils einander entgegengesetzt orientiert, wobei sich Keilwinkel α in der Größenordnung zwischen 15 und 30°, insbesondere in der Größenordnung von etwa 20°, besonders bewährt haben.

Durch das Überlappen der Schneiden 28 der Messer 26, 27 in den Bereichen 33, das mindestens während des Schneidvorganges stattfinden muss, ergibt sich eine geschlossene Schnittlinie, die jedoch einmal von einem Messer 26 zum Schneiden einer Innenform und einmal von einem Messer 27 benachbart zum erstgenannten zum Schneiden einer Außenform gebildet ist.

Der Schneidvorgang selbst wird bewerkstelligt, indem der Druckmittelzylinder 16 beaufschlagt wird, wodurch der Dorn 14 über seine Keilendflächen 15 an den Keilflächen 29 der Messer 26, 27 zur Anlage gelangt und diese bei weiterem axialen Bewegen des Doms 14 sternförmig nach außen bewegt, bis die Schneiden 28 der Messer 26, 27 das Werkstück 1 an der Schnittlinie 6 durchdringen und in den Stempel S - wie Fig. 6 zeigt - geringfügig eindringen. Unter geringfügig wird ein Ausmaß zwischen 0,1 bis 0,9 mm, vorzugsweise ein Eindringen um maximal 0,3 mm verstanden. Der Druckmittelzylinder 16 ist doppelt hydraulisch oder pneumatisch beaufschlagbar. Beim Rückbewegen zieht er den Dorn 14 wieder nach oben. Zum Zurückziehen der Messer 26, 27 sind vorzugsweise in der Aufnahme 13 vorgesehene Federn 36 gegen Fortsätze 29' der Messer 26, 27 gerichtet.

Ein Messerblock 11, wie oben beschrieben, kann auch dann vorgesehen sein, wenn das Werkstück 1 an seinem äußeren Rand 2 eine konkave Stelle aufweist. Eine solche Stelle lässt sich ebenfalls nur schneiden, wenn zumindest zwei einander benachbarte Messer, die wie oben beschrieben angeordnet sind, sich sternförmig nach außen durch das Werkstück 1 hindurchbewegen, bis sie ebenfalls in eine Matrize, die an dieser Stelle vorgesehen sein muss, eindringen.

Grundsätzlich wird das Werkstück 1 im kalten Zustand geschnitten, ein Erwärmen kann sich jedoch je nach Form und Werkstoff des Werkstückes bewähren.

Für den oben beschriebenen Zylinderblock bewegt sich der Hub des Kolbens 19 des Druckmittelzylinders 16 in der Größenordnung von etwa 10 mm, wodurch sich ein Messerbewegungsweg von einer zurückgezogenen Werteposition - dargestellt in Fig. 2 - in eine Schneid-Endposition (vgl. Fig. 6) von etwa 3 mm ergibt.

Ein besonderes Problem beim Schneiden von Kunststoffolien, insbesondere beim Schneiden mehrschichtiger Kunststofffolien, von denen zumindest eine Schicht spröde ist, stellt die Langlebigkeit der Schneide eines Messers dar. Versuche mit Messerstählen höchster Qualität haben keine genügende Standzeit ergeben. Oft kam es schon nach einigen hundert Schneidvorgängen zu Ausbrüchen oder zur Bildung von Rauhigkeiten an den Schneiden, was zu unsauberen und daher unbrauchbaren Randlinien 2 bzw. 6 an Werkstücken 1 führte.

Erfindungsgemäß sind die Schneiden 10, 28 der Messer 7, 26, 27 von für Messer untypischen Werkstoffen gebildet nämlich von Warmarbeitsstählen, wie sie beispielsweise für Pressdorne, Pressmatrizen und Blockaufnehmer für Metallrohre und Strangpressen oder auch für Werkzeuge für die Hohlkörperfertigung bzw. Werkzeuge für die Schrauben-, Muttern-, Nieten- und Bolzenerzeugung eingesetzt werden, gebildet. Solche Stähle sind insbesondere die Stähle 1.2343 (X38CrMoV5-1) oder 1.2344 (X40CrMoV5-1) oder 1.6565 nach DIN. Mit diesen Werkstoffen hat sich überraschenderweise geziegt, dass sehr hohe Standzeiten erzielt werden können, beispielsweise können mit einem Messer ohne Nachschärfen 100.000 Schnitte durchgeführt werden, und zwar bei höchser Qualität der Randlinien 2 bzw. 6.

Als wesentlich hat sich noch gezeigt, dass die Schneiden der Messer nach dem Schärfen zu polieren sind, was eine weitere Verbesserung der Standzeit zur Folge hatte.

Ein Werkstoff X 40 CrMoV 5.1 wies beispielsweise folgende chemische Zusammensetzung auf:

| | | | | | | | | |
|---|---|---|---|---|---|---|---|---|
| C | Si | Mn | P | S | Cr | Ni | Mo | V |
| ,37 | ,98 | ,35 | ,016 | ,001 | 4,89 | ,18 | 1,23 | ,924 |

Dieser Werkstoff wies eine Härte nach Brinell von 190 HB und einen Verschmiedungsgrad von 4,6 auf.

Weitere gute Ergebnisse konnten noch mit einem Werkstoff 42NiCrMoV5.4 mit der nachstehenden chemischen Zusammensetzung erzielt werden.

| | | | | | | | | |
|---|---|---|---|---|---|---|---|---|
| C | Si | Mn | P | S | Cr | Ni | Mo | V |
| ,42 | ,30 | ,85 | ,008 | ,011 | 1,04 | 1,23 | ,67 | ,098 |

Die Härte nach Brinell betrug 389 HB im vergüteten Zustand, der Verschmiedungsgrad war 5,4.

## Patentansprüche

1. Verfahren zum Schneiden einer zwei- oder dreidimensionalen Randlinie (2, 6) an einem dreidimensionalen, dünnwandigen Werkstück (1), insbesondere an einem aus einer Kunststofffolie oder aus mehreren übereinandergelegten, miteinander verbundenen Kunststofffolien geformten Werkstück (1), wobei die Randlinie (2, 6) von mindestens zwei entlang der Randlinie (2, 6) angeordneten Messern (7, 26, 27) mit jeweils einer Schneide (10, 28) geschnitten wird und die Messer (7, 26, 27) nur von einer Oberflächenseite des Werkstückes (1) an die Randlinie (2, 6) heranbewegt werden, wobei das Werkstück (1) während des Schneidvorganges beidseitig mit dieses fixierenden Spannkräften beaufschlagt wird, und zwar durch Einspannen zwischen einem innenseitig zur Anlage gelangenden Stempel (S) und einer außenseitig zur Anlage gelangenden Matrize (M), **dadurch gekennzeichnet, dass** alle Messer (7, 26, 27) mit der Schneide nach dem Durchschneiden des Werkstückes (1) geringfügig in den Stempel (S) eindringen.

2. Verfahren nach Anspruch 1, **dadurch gekennzeichnet, dass** die Schneiden (28) benachbarter Messer (26, 27) einander zumindest während des Schneidvorganges über einen Bereich (33) überlappen, wobei die Messer (26, 27) mit Abschnitten ihrer Schneidenrücken (34, 35) aneinander anliegen.

3. Verfahren nach Anspruch 1 oder 2, **dadurch gekennzeichnet, dass** die Schnittlinie (6) abwechselnd von Messern (26) zum Schneiden einer Außen- und Messern (27) zum Schneiden einer Innenform gebildet wird.

4. Verfahren nach Anspruch 1, 2 oder 3, **dadurch gekennzeichnet, dass** die Messer (7, 26, 27) mit ihren Schneiden (10, 28) bis maximal 0,5 mm, vorzugsweise maximal 0,3 mm, in den Stempel eindringen.

5. Verfahren nach einem oder mehreren der Ansprüche 1 bis 4, **dadurch gekennzeichnet, dass** die Messer (7, 26, 27) nur von der Sichtseite des Werkstückes (1) zum Werkstück (1) geführt werden.

6. Vorrichtung zur Durchführung des Verfahrens nach einem oder mehreren der Ansprüche 1 bis 5, mit:
- einem Stempel als Auflage für das Werkstück (1), auf dem das Werkstück (1) mindestens im Bereich der Randlinie (2, 6) zur Anlage gelangt,
- einer Matrize (M) zum Einspannen des Werkstückes (1) gegen den Stempel (S), wobei die Matrize (M) im Abstand von der Randlinie am Werkstück (1) anliegt und,
- mit gegen die Randlinien (2, 6) von nur eine Oberflächenseite des Werkstückes (1) bewegbaren Messer (7, 26, 27),
- **dadurch gekennzeichnet, dass** alle Messer (7, 26, 27) geringfügig über die Dicke des Werkstückes (1) hinaus bewegbar sind.

7. Vorrichtung nach Anspruch 6, **gekennzeichnet durch** die Kombination folgender Merkmale:
- einen Messerhalter (25) mit Gleitführungen (31, 32) für mindestens zwei benachbart in dem Messerhalter (25) angeordnete Messer (26, 27) und
- mindestens zwei Messer (26, 27), deren Schneiden (28) einander bei in Schneidposition gebrachten Messern (26, 27) teilweise überlappen (bei 33),
- wobei ein Messer (26) mit seinem Schneidenrücken (34) nach einer ersten Richtung gewendet im Messerhalter (25) angeordnet ist und das benachbarte Messer (27) mit seinem Schneidenrücken (35) in einer zur ersten Richtung entgegengesetzten Richtung am Messerhalter (25) angeordnet ist, wobei die Schneidenrücken (34, 35) mit Endabschnitten (33) zumindest bei in Schneidposition gebrachten Messern (26, 27) aneinander anliegen und während des Schneidens aneinander gleitend geführt sind.

8. Vorrichtung nach Anspruch 6 oder 7, **dadurch gekennzeichnet, dass** die Führungen (31, 32) am Messerhalter (25) sich sternfömig radial nach außen erstrecken und die Messer (26, 27) synchron mittels eines im Messerhalter (25) zentral angeordneten Keildorns (14) radial nach außen bewegbar sind und dass die Messer (26, 27) nach Rückziehen des Keildorns (14) in die Ausgangsposition mittels elastisch federnder Mittel (36) bewegbar sind.

9. Vorrichtung nach Anspruch 6, 7 oder 8, **dadurch gekennzeichnet, dass** die Messer (26, 27) ebene geradlinige Führungsflächen aufweisen, die an ebenen geradlinigen Gegenführungsflächen (31, 32) des Messerhalters (25) gleitend angeordnet sind, wogegen die Schneiden (28) der Messer (26, 27) zwei- oder dreidimensional geformt sind und benachbarte Messer (26, 27) gegengleich angeordnet sind, d.h. dass bei einem Messer (26) der Schneidenrücken (34) nach einer ersten Seite hin und beim benachbarten Messer (27) nach einer zur ersten Seite entgegengesetzten Seite hin gerichtet ist.

10. Vorrichtung nach einem oder mehreren der Ansprüche 6 bis 9, **dadurch gekennzeichnet, dass** die Keilwinkel (α) der Schneiden benachbarter Messer von einer gedachten Schnittfläche einander entgegengesetzt orientiert sind.

11. Vorrichtung nach einem oder mehreren der Ansprüche 6 bis 10, **dadurch gekennzeichnet, dass** die Messer (26, 27) an einem Messerblock (11) vorgesehen sind, der in sämtlichen Richtungen des Raumes gegenüber einem Maschinengestell (12) verstellbar ist.

12. Vorrichtung nach einem oder mehreren der Ansprüche 6 bis 11, **dadurch gekennzeichnet, dass** der Keilwinkel (α) der Messer (7, 26, 27) zwischen 10 und 30°, vorzugsweise zwischen 17 und 23°, liegt.

13. Vorrichtung nach einem oder mehreren der Ansprüche 6 bis 12, **dadurch gekennzeichnet, dass** der Messerweg derart bemessen ist, dass die Schneide (10, 28) der Messer (7, 26, 27) sich über die Innenfläche des Werkstückes (1) geringfügig hinausbewegt, vorzugsweise um maximal 0,5 mm, insbesondere um maximal 0,3 mm.

14. Messer zur Verwendung an einer Vorrichtung zum Schneiden einer Kunststofffolie eines aus einer Kunststofffolie oder aus mehreren, miteinander verbundenen Kunststofffolien gebildeten Werkstückes (1) nach einem oder mehreren der Ansprüche 6 bis 13, **dadurch gekennzeichnet, dass** die Schneide (10, 28) des Messers (7, 26, 27) aus Warmarbeitsstahl, insbesondere aus 1.2343 oder 1.2344 oder 1.6565 nach DIN, letzterer auch wie folgt abgewandelt:
| | | | | | | | | |
|---|---|---|---|---|---|---|---|---|
| C | Si | Mn | P | S | Cr | Ni | Mo | V |
| ,42 | ,30 | ,85 | ,008 | ,011 | 1,04 | 1,23 | ,67 | ,098 |
gebildet ist und vorzugsweise poliert ist.
